# EUROPÄISCHE PATENTSCHRIFT

(11) **EP 0 517 202 B1**
(45) Veröffentlichungstag und Bekanntmachung des Hinweises auf die Patenterteilung: **31.08.1994**
(21) Anmeldenummer: 92109420.7
(22) Anmeldetag: 04.06.1992
(51) Int. Cl.: E03B 3/02, E04D 13/08

(54) **Vorrichtung zum Abzweigen von Regenwasser aus einem Dachrinnenfallrohr**
Device for diverting rainwater from a downpipe
Dispositif pour dériver l'eau pluviale du conduit de descente

(30) Priorität: 06.06.1991 DE 4118562; 28.01.1992 DE 4202245
(43) Veröffentlichungstag der Anmeldung: 09.12.1992
(73) Patentinhaber: Holstein, Reinhold, D-89547 Gerstetten (DE); Pfeiffer, Stephan, 89542 Herbrechtingen (DE); Schoell, Reiner, D-89129 Langenau (DE)
(72) Erfinder: Holstein, Reinhold, W-89547 Gerstetten (DE)
(74) Vertreter: Lorenz, Werner, Dipl.-Ing.

(56) Entgegenhaltungen:
- DE-A- 3 517 279
- DE-A- 3 708 566
- DE-A- 3 812 136
- DE-A- 3 819 962
- DE-A- 3 821 633

## Beschreibung

Die Erfindung betrifft eine Vorrichtung zum Abzweigen von Regenwasser aus einem Dachrinnenfallrohr mit einem in das Fallrohr einsetzbaren Gehäuse mit einer Absperrklappe und einer Siebeinrichtung vor der Abzweigleitung.

Zur Einsparung von Frischwasser ist es bekannt, Regenwasser für Brauchwasserkreisläufe, z.B. Toilettenspülungen, Waschmaschinen und dergleichen zu verwenden. Dabei ist jedoch auch eine möglichst gute Wasserqualität anzustreben, damit es nicht zu Problemen bezüglich der Funktion von technischen Einrichtungen kommt, die mit diesem Wasser versorgt werden. Weiterhin soll verhindert werden, daß das in entsprechenden Wassertanks gespeicherte Wasser zu schnell "umkippt", das heißt z.B. durch Bakterien, Pilzbefall oder dergleichen unbrauchbar wird. Weiterhin soll vermieden werden, daß die mit diesem Wasser in Berührung kommenden Leitungen, Tanks und Zisternen häufig gereinigt werden müssen.

Mit den bekannten Einrichtungen und Mitteln ist es kaum möglich, alle nichtlöslichen Schmutzbestandteile, wie z.B. Steine, Laub, Vogelkot, Sand, Blütenstaub und dergleichen, aber auch löslichen Schmutz, wie er z.B. durch Rauchgase oder durch die Abgase von Verbrennungsmotoren entsteht, zurückzuhalten.

Bekannt sind z.B. sogenannte Regenwasserklappen, die manuell oder automatisch durch ein entsprechendes Öffnen oder Schließen einer Klappe eine Zisterne oder einen Wassertank befüllen. Teilweise sind diese Vorrichtungen auch mit groben Sieben versehen, die jedoch von Zeit zu Zeit zu entleeren sind.

Nachteilig bei diesen vorbekannten Vorrichtungen ist jedoch, daß die zunehmende Luftverschmutzung nicht berücksichtigt wird, durch die z.B. nach Trockenperioden bei einem einsetzenden Regen eine hohe Schmutzfracht in den Wassertank bzw. die Zisterne gefördert wird. Mit den vorhandenen Sieben, die manuell gereinigt werden mußten, konnten Verunreinigungen nur in unzureichendem Maße entfernt werden. Weiterhin ist bei den bekannten Vorrichtungen von Nachteil, daß kein wartungsfreier Betrieb möglich ist und nicht das gesamte nutzbare Regenwasser genutzt werden kann.

Der vorliegenden Erfindung liegt daher die Aufgabe zugrunde, die vorstehend genannten Nachteile zu beseitigen, insbesondere eine Vorrichtung der eingangs erwähnten Art zu schaffen, mit der Regenwasser mit guter Qualität bei geringem Aufwand und einer weitgehenden Wartungsfreiheit gewonnen werden kann.

Erfindungsgemäß wird diese Aufgabe durch die in Anspruch 1 genannten Merkmale gelöst.

Durch die erfindungsgemäße Anordnung von Einrichtungen, die erst entsprechend verzögert die Gewinnung von Regenwasser zulassen, wird insbesondere der Tatsache Rechnung getragen, daß das bei Regenbeginn anfallende Regenwasser in hohem Maße chemisch und physikalisch verunreinigt ist. Dabei kann die Steuerung im Bedarfsfalle auch automatisch erfolgen, so daß nur Wasser einer definierten Qualität (z.B. bezüglich Klarheit, Leitfähigkeit u.a.) in die angeschlossene Zisterne gelangen kann.

Durch die verzögerte Einleitung von Regenwasser in die Abzweigleitung wird ein Regenwasser mit einer weit besseren Qualität erhalten, wie es bisher mit den bekannten Vorrichtungen der Fall ist.

Die Steuerung der Einrichtungen zur zeitverzögerten Schließung der Absperrklappe kann auf verschiedene Weise erfolgen. Möglich sind z.B. einfache Zeitschaltglieder, die erst nach einer gewissen Zeit die Absperrklappe schließen. Ebenso sind statt dessen oder zusätzlich Mengenschaltglieder möglich, die erst nach Durchlauf einer vorgewählten Regenwassermenge die Absperrklappe schließen und damit die Abzweigung des Regenwassers in die Abzweigleitung ermöglichen.

Eine sehr genaue Überwachung und damit eine sehr gute Wasserqualität wird erreicht, wenn die Einrichtungen Sensoren aufweisen, die die Wasserqualität messen.

Ein weiterer Vorteil der zeitverzögerten Absperrung der Absperrklappe besteht auch darin, daß während dieser Zeit auch das Sieb von daran anhaftenden Verunreinigungen gereinigt werden kann.

Diese Reinigung läßt sich noch verbessern, wenn in nicht naheliegender Weise vorgesehen ist, daß zwischen der Siebeinrichtung und der Abzweigleitung eine Überlaufkammer angeordnet ist, von derem oberen Ende aus die Abzweigleitung abzweigt. Dabei kann nämlich vorgesehen sein, daß die Überlaufkammer als Rückspülkammer zur Freispülung der Siebeinrichtung ausgebildet ist.

Durch eine entsprechende Steuerung der Einrichtungen läßt sich auf diese Weise eine Rückspülung des Siebes von hintenher aus der Überlaufkammer erreichen, wobei dies gegebenenfalls sogar durch ein mehrfaches Öffnen und Schließen der Absperrklappe mit mehrern Spülvorgängen erfolgen kann, wodurch die Qualität des abgezweigten Regenwassers noch besser wird, insbesondere aber die Wartungsfreiheit gewahrleistet ist.

Die Reinigung des Siebes per Rückspülung ist erfindungsgemäß dadurch besonders wirksam gelöst, daß der Schmutzeintrag in das Sieb unter geringerem Druck erfolgt, als das Ausspülen dieses Schmutzes aus dem Sieb.

Vorteilhafte Ausgestaltungen und Weiterbildungen der Erfindung ergeben sich aus den Unteransprüchen und den nachfolgend anhand der Zeichnung beschriebenen Ausführungsbeispielen.

Es zeigt:
- Fig. 1: eine Prinzipdarstellung der erfindungsgemäßen Vorrichtung;
- Fig. 2: ein erstes Ausführungsbeispiel;
- Fig. 3: eine Ausschnittvergrößerung des Ausführungsbeispieles nach der Fig. 2;
- Fig. 4: ein zweites Ausführungsbeispiel;
- Fig. 5: ausschnittsweise ein drittes Ausführungsbeispiel;
- Fig. 6: eine Einstellscheibe für das unter Fig. 5 dargestellte Dosiergefäß;
- Fig. 7: eine Reinigungsvorrichtung für einen Sammelbehälter;
- Fig. 8: ein Ausführungsbeispiel für die Abdichtung mit einer Absperrklappe;
- Fig. 9: ein Verriegelungs- und Auslösemechanismus für die Absperrklappe;
- Fig. 10: eine Schlitzmembrane zum Absorbieren der kinetischen Energie des Wassers;
- Fig. 11: eine weitere Vorrichtung zum Absorbieren der kinetischen Energie des Wassers.

In ein Dachrinnenfallrohr mit einem oberen Fallrohrteil 1 und einem unteren Fallrohrteil 2 wird ein Gehäuse 3 eingesetzt, von dem aus seitlich eine Abzweigleitung 4 abzweigt.

In dem Gehäuse 3 ist ein Siebkorb 5 in Zylinder- bzw. Hülsenform angeordnet, der zwischen dem oberen Fallrohrteil 1 und einer wasserundurchlässigen Zwischenwand 6 liegt. In der Zwischenwand 6 ist eine zentrale Öffnung angeordnet, die dem Durchmesser des Siebkorbes 5 entspricht. Diese Öffnung ist durch eine Absperrklappe 7 absperrbar.

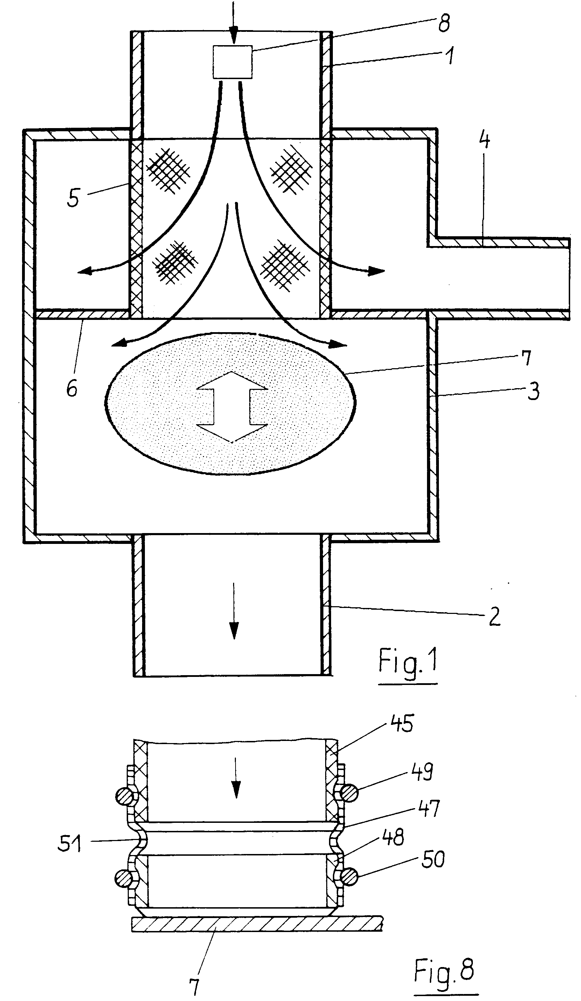

Über dem Siebkorb 5 in dem oberen Fallrohrteil 1 ist eine nicht näher dargestellter Sensor 8 als Teil einer Einrichtung angeordnet, durch die Absperrklappe 7 geöffnet oder geschlossen wird. In der Prinzipdarstellung Fig. 1 sind hierzu keine näheren Ausführungen gemacht.

Der Sensor 8 kann z.B. ein Sensor sein, der die Wasserqualität mißt. Hierzu sind z.B. elektronische Sensoren geeignet, die die Durchsichtigkeit, die Leitfähigkeit und dergleichen des Wassers messen und auf diese Weise dessen Qualität feststellen. Nach Erreichung einer entsprechenden vorgewählten Qualität wird die Absperrklappe 7 nach oben bewegt, wobei sie die Öffnung in der Zwischenwand 6 abschließt. Anschließend wird Regenwasser in die Abzweigleitung 4 eingeleitet.

Statt Sensoren 8, die die Wasserqualität messen, können auch einfache zeit- und/oder mengenabhängige Sensoren verwendet werden.

Bei Verwendung von zeitabhängigen Sensoren erfolgt das Verschließen der Öffnung in der Zwischenwand 6 durch die Absperrklappe 7 entsprechend zeitverzögert.

Bei einer Messung durch Sensoren, oder andere Meßglieder, die mengenabhängig reagieren, erfolgt die zeitverzögerte Schließung der Absperrklappe 7 entsprechend in Abhängigkeit einer vorgewählten Durchlaßmenge.

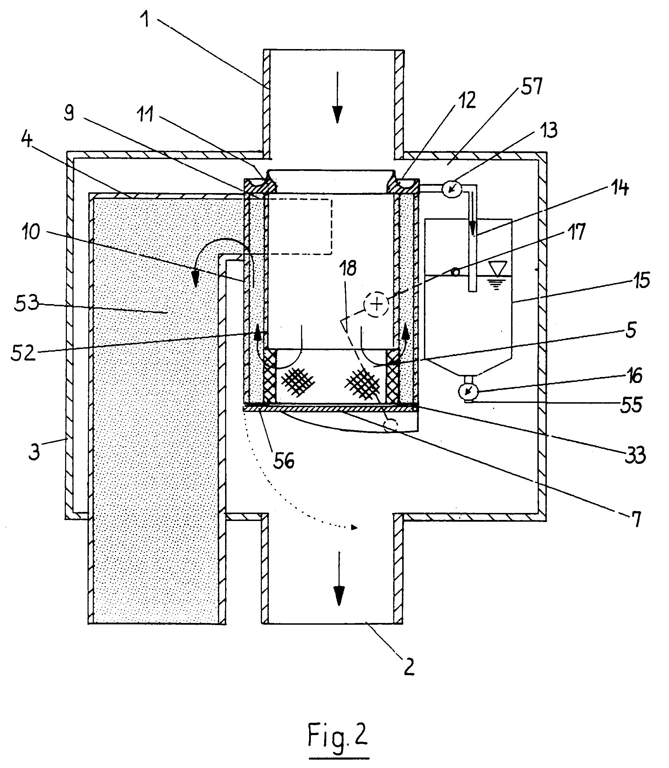

In der Fig. 2 ist ein erstes Ausführungsbeispiel der Erfindung dargestellt. Wie ersichtlich ist hier eine Überlaufkammer in Form einer Rückspülkammer 9 vorhanden. Die Rückspülkammer 9 wird durch die zylindrische Wand des Siebkorbes 5 und ein achsparallel und auf Abstand dazu den Siebkorb umgebendes wasserundurchlässiges Rohr 10 gebildet. Vorzugsweise wird sich dabei der Siebkorb 5 nur über einen Teil der Höhe der Rückspülkammer 9 erstrecken, damit mit einem entsprechenden Druck aufgrund der darüberstehenden Wassersäule eine Rückspülung des Siebkorbes 5 aus der Rückspülkammer 9 erfolgt. In diesem Falle ist auf dem Siebkorb 5 eine wasserundurchlässige Hülse 52 aufgesetzt. Zwischen der Absperrklappe 7 und dem Rohr 10 kann gegebenenfalls noch eine Dichtung 56 angeordnet sein.

Bei dieser Ausführungsform zweigt die Abzweigleitung 4 im oberen Bereich aus der Rückspülkammer 9 ab und mündet in eine Auslaßleitung 53.

Der dadurch entstehende Überlaufbereich 57 ist aus grundsätzlichen Erwägungen (Vorschriften) vorgesehen Der Überlauf 57 stellt unabhängig von Fehlfunktionen den Querschnitt des Zulaufs für die gesamte Einrichtung sicher.

Auf die Überlaufkammer 9 und die Hülse 52 ist ein Ring 11 aufgesetzt, der eine ringförmige Sammelrinne 12 aufweist. Der Innendurchmesser der Sammelrinne 12 ist dabei so gewählt, daß er gleich oder geringfügig kleiner oder größer ist als der Durchmesser des oberen Fallrohrteiles 1. Durch diese Ausgestaltung kann eine geringfügige Menge von Regenwasser, insbesondere Regenwasser das an der Innenwand des oberen Fallrohrteiles 1 entlangläuft, in die Sammelrinne 12 gelangen, von wo aus es über ein Füllrohr 14, das noch mit einem Absperrventil 13 versehen sein kann, und zwar zum Einstellen der Ansprechzeit (also der Zeit bis die Klappe schließt) mit einem Sammelbehälter 15 verbunden ist. Der Sammelbehälter 15 kann auf der Unterseite mit einem Ablaßhahn 16 versehen sein, und zwar zum Einstellen der Zeit, nach der die Klappe sich wieder öffnet, wenn kein Wasser mehr durch das obere Fallrohr strömt.

Der über die Sammelrinne 12 und das Füllrohr 14 sich füllende Sammelbehälter 15 bewirkt über ein nicht näher dargestelltes Hebelgestänge 17 und 18 mit Anlenk- und Drehpunkten das Schließen der Absperrklappe 7. Gegebenenfalls wird die auf die Klappe 7 wirkende Schließkraft über eine Kurvenscheibe (die auch Bestandteil der Klappe sein kann) so gesteuert, daß die Kraft zum Zuhalten der Klappe ausreichend ist.

Die Klappe 7 ist geöffnet, solange der Sammelbehälter 15 leer ist. Während des Füllens des Sammelbehälters 15 wird bei geöffneter Klappe 7 die Sieboberfläche durch das an ihr entlangströmende Wasser vom Schmutz gereinigt.

Mit dem Schließen der Klappe 7 wird das Sieb 5 wirksam. Dies bedeutet, der Wasserstand im Inneren des Siebkorbes und in der Rückspülkammer 9 steigt so hoch, daß ein Ablauf des Regenwassers über die Abzweigleitung 4 erfolgen kann.

Wird die Einrichtung nicht mehr durch das Fallrohr 1 mit Wasser versorgt, läuft der Sammelbehälter 15 durch die Auslaßöffnung 55 leer. Die hierfür erforderliche Zeit kann über Ventil 16 verändert werden.

Mit dem Öffnen der Klappe 7 wird das Sieb 5 durch vom Rückspülraum 9 durch das Sieb rückströmende Wasser gereinigt.

Die Zeit bis zur Füllhöhe in dem Sammelbehälter 15, bei der das Hebelgestänge 18 wirksam wird, kann gegebenenfalls auch noch durch einen gleichzeitigen Ablauf aus der Auslaufsöffnung 55 gesteuert werden.

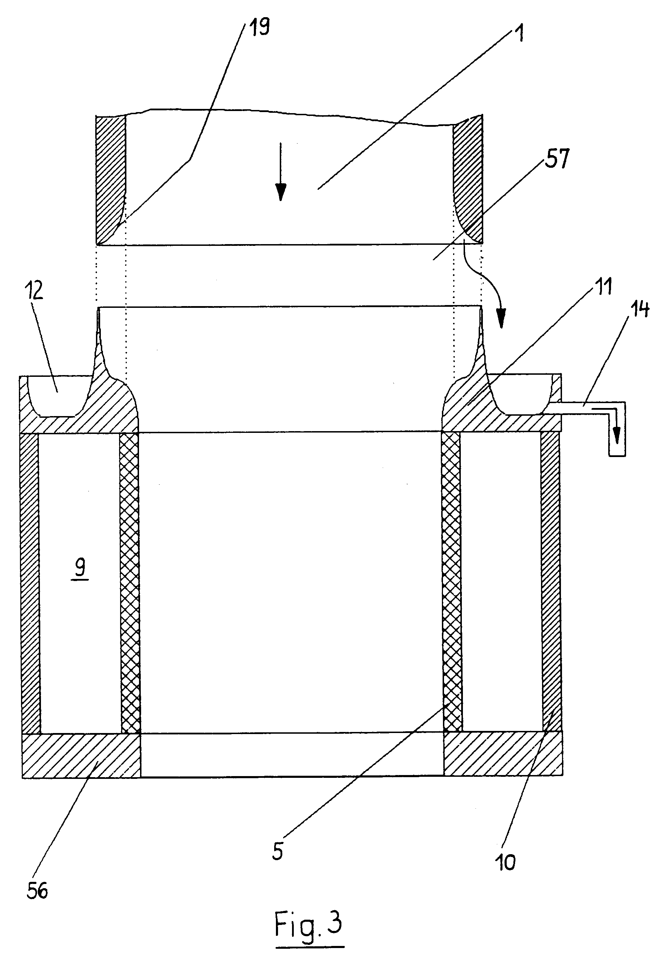

In der Fig. 3 ist ein Ausschnitt aus der Fig. 2 in vergrößertem Maßstab dargestellt. Wie dabei ersichtlich ist, entsprechen sich nahezu die Durchmesser der Regenrinne 12 und des oberen Fallrohrteiles 1, aber aufgrund einer Abrundung 19 am unteren Ende des oberen Fallrohrteiles 1 gelangt eine entsprechend geringe Menge von Regenwasser in die Sammelrinne 12. Wesentlich ist, daß das so in die Sammelrinne 12 gelangende Wasser von gröberem Schmutz gereinigt ist.

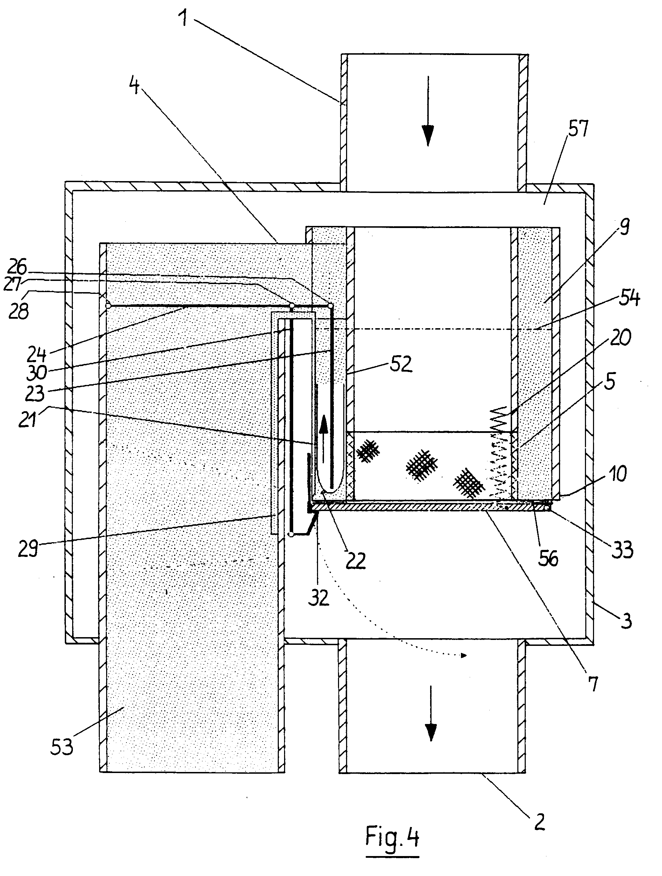

In der Fig. 4 ist ein weiteres Ausführungsbeispiel dargestellt, wobei die Zuhaltung der Absperrklappe 7 durch eine Feder 20 und eine Haltenase 32 (z.B. als Bestandteil einer Blattfeder) erfolgt.

In der Überlaufkammer 9 befindet sich ein Schwimmer 21 in Form einer Röhre, die auf der Unterseite bis auf eine kleine Leckage-Bohrung 22 geschlossen und auf der Oberseite offen ist. In den Schwimmer ragt ein Stab 23 eines Gestänges 24, das Drehpunkte 26, 27 und 28 aufweist.

In die Rückspülkammer 9 ragt ein Ende eines Rohres eines Saughebers 29 bis in den unteren Bereich der Rückspülkammer 9. Das andere Ende des Saughebers liegt mit seiner Öffnung tiefer in der Auslaßleitung 53. Ein Stab 30 des Gestänges 24 ragt zwischen der Abzweigleitung 4 und der Rückspülkammer 9 senkrecht nach unten. Über den Hebelmechanismus 23, 24 und 30 wird die Auftriebskraft des Schwimmers 21 auf die Blattfeder mit Haltenase 32 übertragen. Auf der Haltenase 32 liegt das von dem Drehpunkt 33 der Absperrklappe 7 abgewandte Ende im geschlossenen Zustand dicht auf.

Das Ausführungsbeispiel nach der Fig. 4 funktioniert auf folgende Weise:
Bei Regenbeginn füllt sich der Innenraum des Siebkorbes 5 und die Rückspülkammer 9 mit Regenwasser auf, wobei der Schwimmer 21 entsprechend aufschwimmt.

Das Wasser steigt bis zum Grenzwasserstand 54. Beim Erreichen dieses Wasserstandes löst der Schwimmer über den Hebelmechanismus 23, 24 und 30 und die Blattfeder mit Haltenase 32 das Öffnen der Klappe 7 aus. Die Rückholfeder 20 muß hierbei so dimensioniert und befestigt sein, daß die Klappe vollständig geöffnet, das heißt, die Feder 20 nimmt einen Teil der potentiellen Energie des oberhalb der Klappe 7 gespeicherten Wassers auf, um sie dann beim Schließen wieder abzugeben (Wasserstrom durch Fallrohr 1 und Blattfeder mit Haltenase müssen überwunden werden).

Durch das Öffnen der Klappe strömt das in der Rückspülkammer 9 befindliche Wasser durch das Sieb und reinigt dieses. Zeitgleich wird die Sieboberfläche durch den laufenden Wasserfluß (durch Zulauf 1) gereinigt.

Mittels Rückholfeder 20 wird die geöffnete Klappe 7 wieder geschlossen, und das durch das Fallrohr 1 fließende Wasser wird oberhalb der Klappe 7 wieder aufgestaut.

Die Klappe 7 öffnet und schließt sich solange bis Schwimmer 21 wegen des durch die Leckageöffnung 22 einströmende Wasser nicht mehr aufschwimmt, das heißt, die Blattfeder mit Haltenase 32 nicht mehr ausgelöst wird. Danach steigt der Wasserstand solange, bis es durch die Auslaßleitung 4 und 53 abfließt, also auch durch das als Saugheber angelegte Rohrstück 29.

Wird der Einrichtung durch den Zulauf 1 kein Wasser mehr zugeführt, läuft die Rückspülkammer 9 durch den Saugheber 29 leer; dadurch wird auch die Entleerung des Schwimmers 21 durch die Öffnung 22 ermöglicht, wodurch die Einrichtung wieder in den Ausgangszustand zurückkehrt.

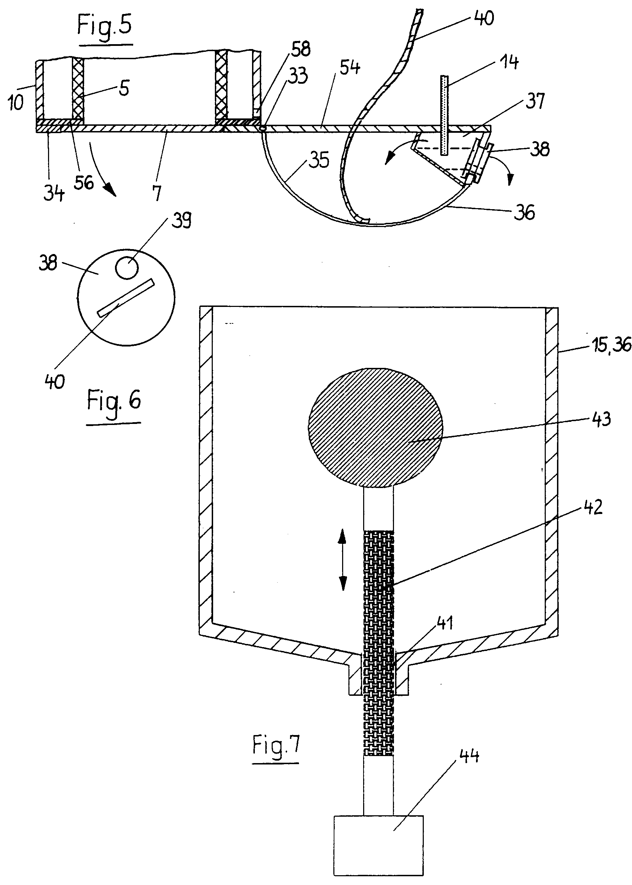

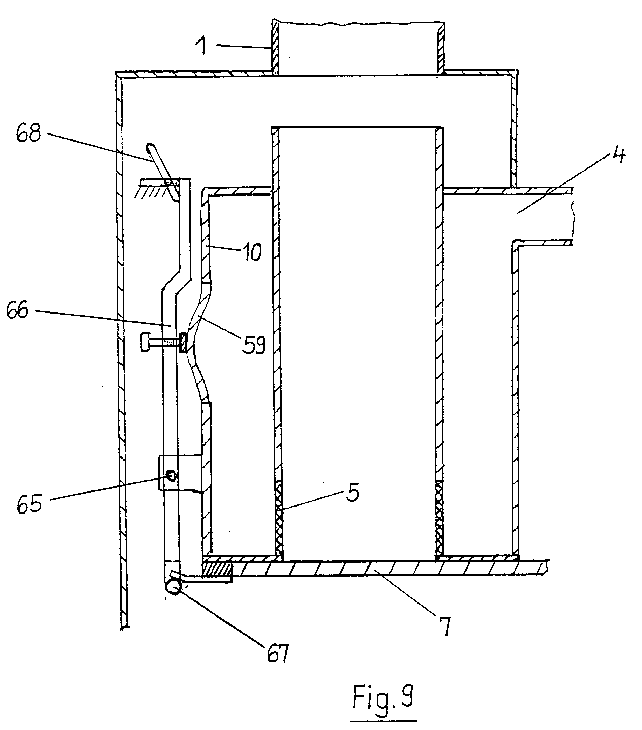

Aus der Fig. 5 ist ein Ausführungsbeispiel ersichtlich, wobei zur Vereinfachung lediglich der untere Bereich der Vorrichtung mit der Absperrklappe 7 dargestellt ist, da aus diesem Teil das Funktionsprinzip ersichtlich ist. Wie dargestellt, besitzt die Absperrklappe 7 im vorderen Bereich einen Magneten 34, der mit einem entsprechend magnetisierbaren Teil der Vorrichtung, z.B. dem Rohr 10 zusammenarbeitet. Selbstverständlich kann dieser Haltemagnet 34 bei Realisierung einer elektrisch geregelten Vorrichtung als elektrisch gesteuertes Stellglied ausgebildet sein. Auf der von dem Siebkopf 5 abgewandten Seite des Drehpunktes 33 ist die Absperrklappe 7 mit einem Verlängerungsteil 54 versehen. Eine halbkreisförmige Wanne 35 ist unter der Verlängerung 54 angeordnet und bildet einen Sammelbehälter bzw. Sammeltank 36. In den Sammeltank 36 ragt das untere Ende des Füllrohres 14, in das Regenwasser aus der Rückspülkammer 9 fließen kann. Das Füllrohr 14 kann selbstverständlich dadurch entfallen, daß in der Außenwand 10 der Filtereinrichtung eine Bohrung 58 so angebracht ist, daß der durch diese Bohrung 58 austretende feine Wasserstrahl über eine entsprechend gestaltete Klappenoberfläche ( z.B. als Rinne) in das Dosiergefäß geleitet wird (das heißt, statt des Füllrohrs 14 befindet sich lediglich eine Öffnung an der Klappenoberfläche). Das Regenwasser aus dem Füllrohr 14 gelangt in ein Dosiergefäß 37, das auf der von dem Drehpunkt 33 abgewandten Seite im oberen Bereich des Sammeltankes 36 angeordnet ist. Das Dosiergefäß 37 ist außenseitig mit einer Stellscheibe 38 versehen, die eine Auslaßöffnung 39 als Überlauf nach außen besitzt (siehe Fig. 6). Über einen Schraubenzieherschlitz 40 ist die Stellscheibe 38 verstellbar, wodurch aufgrund der außermittig angebrachten Ausgangsöffnung 39 diese in ihrer Höhe variiert. Zusätzlich zu dem Magnet 34 kann gegebenenfalls noch eine Rückholfeder für die Absperrklappe 7 und/oder eine Raste (z.B. gemäß Fig. 9) vorgesehen sein.

Das Ausführungsbeispiel nach den Figuren 5 und 6 funktioniert auf folgende Weise:
Wenn es nicht regnet, ist die Absperrklappe 7 wegen des Gegengewichtes der Wanne 35 bzw. des Sammelbehälters 36 geschlossen.

Nach Regenbeginn füllt sich der Innenraum des Siebkorbes 5 und die Rückspülkammer 9 bis zu einer Höhe, bei der das Gewicht der Wassermenge die Magnethaltekraft und gegebenenfalls die Federkraft sowie das Gegengewicht des Sammelbehälters 36 übersteigt. Gleichzeitig wird auch das Dosiergefäß 37 über die Zuleitung 14 befüllt. Beim Öffnen und damit beim nach unten Schwenken der Absperrklappe 7 in Pfeilrichtung entleert sich der Inhalt des Dosiergefässes 37 in den Sammeltank 36. Durch das ausgelaufene Wasser schließt die Absperrklappe 7 durch das Gegengewicht des Sammelbehälters 36 sowie gegebenenfalls durch die Rückstellkraft der Feder wieder, wobei jedoch das Wasser aus dem Dosiergefäß 37 in dem Sammeltank 36 verblieben ist.

Nach Erreichen eines Wasserstandes im Inneren des Siebkorbes 5 der Hülse 52 und der Rückspülkammer 9, in der das Wassergewicht wieder die Schließkraft der Absperrklappe 7 übersteigt, öffnet erneut die Absperrklappe, wobei wiederum die Wassermenge aus dem Dosiergefäß 37 in den Sammeltank 36 fließt. Ist nun durch ein mehrfaches Öffnen und Schließen der Absperrklappe 7 in dem Sammeltank 36 eine große Wassermenge vorhanden, die aus dem Dosiergefäß 37 ratenweise eingeflossen ist, und ist das Gewicht dieser Wassermenge gegebenenfalls zusammen mit der Haltekraft des Magneten und der Kraft der Rückholfeder größer geworden als der Druck der über der Absperrklappe 7 darüberstehenden Wassersäule aus dem Siebkorbinneren und der Rückspülkammer 9, so bleibt die Absperrklappe zu und es fließt Regenwasser über die Abzweigleitung 4 ab.

Aufgrund der mehrfachen Spülung der Sieboberfläche ist dabei eine entsprechende Reinigung erfolgt, so daß Wasser entsprechender Qualität über die Abzweigleitung 4 abgezogen werden kann.

Damit nach einem Regen das in dem Sammeltank 36 zurückgebliebene Wasser wieder aus diesem entfernt werden kann und damit die Vorrichtung beim nächsten Regen für einen weiteren Einsatz zur Verfügung steht, muß dafür gesorgt werden, daß das Wasser daraus entfernt wird. Dies kann z.B. durch einen Docht 40 und eine allmähliche Verdunstung des Wassers erfolgen, oder durch eine gezielte kleine Leckage-Bohrung im unteren Bereich des Sammeltankes 36. Damit eine derart gezielte kleine Auslaufsbohrung 41 sich nicht mit Schmutz zusetzt, kann eine Nadel 42 mit einer rauhen Oberfläche vorgesehen sein, die mit entsprechendem Spiel in der Auslaufbohrung 41 bewegbar ist. Dies kann auf einfache Weise z.B. durch einen Schwimmer 43 und ein Gegengewicht 44 erfolgen. Durch eine entsprechende Änderung des Wasserstandes in dem Sammeltank erfolgt eine entsprechende Auf- und Abbewegung der Nadel 42, wobei durch deren rauhe Oberfläche die Ausgangsöffnung 41 selbsttätig freigehalten wird.

Diese Reinigungsmöglichkeit ist selbstverständlich auch für den Tank 15 gemäß Fig. 2 geeignet. Bei dieser Reinigungsart erfolgt eine permanente Reinigung der kleinen Ausgangsöffnung.

In der Fig. 8 ist prinzipmäßig dargestellt, auf welch einfache Weise ein dichter Abschluß durch die Absperrklappe 7 erreichbar ist. Wie ersichtlich, wird über das untere Ende des Siebkorbes oder eines dazwischengelegten Rohres 45 ein elastisches Spannband 47 mit entsprechender Spannung übergezogen. Mit geringem Abstand unter dem Rohrstück 45 ist ein weiteres kurzes Rohrstück 48 angeordnet, das durch das elastische Spannband 47 mit dem Rohrstück 45 verbunden ist. Durch Spannringe 49 und 50 kann man das Spannband 47 in Mulden der Rohrstücke 45 und 48 drücken, wodurch eine elastische Verbindung zwischen den beiden Rohrstücken 45 und 48 geschaffen wird, mit einem entsprechendem Spalt dazwischen, der aufgrund der Vorspannung des elastischen Bandes 45 als Faltenbalg 51 wirkt. Auf diese Weise kann sich das untere Rohrstück 48, an der die Absperrklappe 7 anliegt, entsprechend auf die Position der Absperrklappe 7 einstellen; d. h. es kann zu keinen Verkantungen aufgrund Einbauungenauigkeiten oder späteren Verschiebungen im Betrieb kommen, so daß stets eine Dichtheit gewährleistet ist.

Durch die zulaufseitig unterschiedlichen Fallrohrhöhen und der damit variierenden kinetischen Energie des in die Einrichtung einströmenden Wassers müssen gegebenenfalls besondere Maßnahmen getroffen werden, damit die Klappe 7 durch das einströmende Wasser nicht aufgedrückt wird.

Fig. 9 stellt einen Verriegelungs- und Auslösemechanismus dar, der die Klappe 7 dann verriegelt, wenn der Filtervorgang begonnen hat. Dies wird dadurch erreicht, daß z.B. durch eine in der Außenwand 10 der Filtereinrichtung eingesetzte elastische Membrane 59 durch den auf sie wirkenden hydrostatischen Druck nach außen gewölbt wird und dadurch der im Drehpunkt 65 gelagerte Hebel 66 durch eine z.B. als Rolle 67 ausgebildete Raste die Klappe 7 verriegelt. Die Verriegelung der Klappe 7 wird dadurch aufgehoben, daß auf die Membrane 59 keine Kraft mehr wirkt oder auf den Hebel 66 ein entsprechender Gegenkrafthebel 68 wirkt.

Wird der Gegenkrafthebel 68 durch das im Falle des Zusetzens mit Schmutz über den Überlauf 57 in den Schmutzwasserablauf 2 gelangende Wasser aufgebracht (z.B. durch eine nicht näher beschriebene Klappe oder Wippe), so wird die Klappe 7 während der Filterphase immer genau dann geöffnet, wenn der Filterkörper mit Schmutz versetzt ist.

Wird die Klappe 7 gegen das Einwirken einer hohen kinetischen Energie verriegelt, so müssen besondere Vorkehrungen zum Schutz der Klappe 7 getroffen werden, da diese sonst z.B. durch Steine oder andere grobe Körper, die mit dem einströmenden Wasser in die Einrichtung gelangen, unter Umständen zerstört würde.

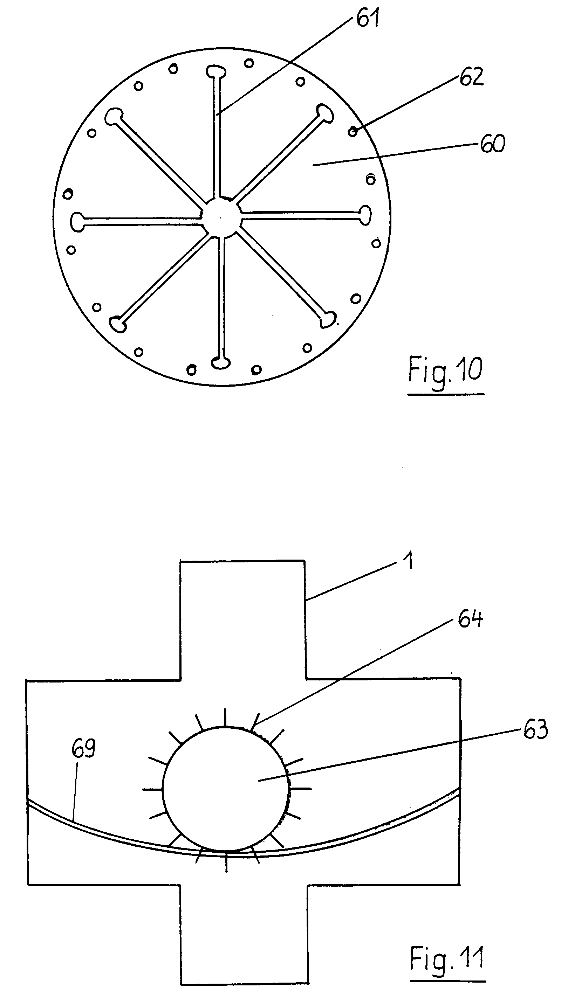

Die Figuren 10 und 11 stellen Ausführungsbeispiele derartiger Vorrichtungen dar.

Fig. 10 stellt eine Schlitzmembrane 60 dar, die oberhalb der Klappe 7, am besten im Zuleitungsbereich 1, angebracht wird. Durch deren Form und Materialbeschaffenheit (elastisch) stellt die Schlitzmembrane 60 sicher, daß geringe Wassermengen die Membrane durch deren Öffnungen 61 passieren können.

Große Wassermengen, Steine usw. werden durch die Membrane im freien Fall gehindert; die Membrane wird dabei geöffnet, kehrt aber durch deren Elastizität wieder in die Ausgangslage zurück.

Fig. 11 zeigt ebenfalls eine Absorptions-Vorrichtung.

Ein zylindrischer Körper 63 verhindert den ungebremsten Fall von Wasser und Gegenständen in die Zuleitung 1 der Einrichtung. Durch die schaufelradartig wirkende Oberfläche 64 und eine nichtebene und zur Mitte hin abfallende Auflage- bzw. Lauffläche 69 zentriert sich der Körper 63 selbst. Fällt z.B. ein Gegenstand durch die Zuleitung 1, so wird dessen Bewegungsenergie in Rotationsenergie des Körpers 63 umgesetzt. Gleiches gilt auch für aus großer Höhe einfallendes Wasser. Der Körper 63 wird in diesem Fall nach links oder rechts auf der Lauffläche 69 ausweichen und den ungehinderten Durchfluß freigeben (kein Verstopfen der Zuleitung) und sofort wieder versperren.

## Patentansprüche

1. Vorrichtung zum Abzweigen von Regenwasser aus einem Dachrinnenfallrohr (1, 2) mit einem in das Fallrohr einsetzbaren Gehäuse (3) mit einer Absperrklappe (7) und einer Siebeinrichtung (5) vor der Abzweigleitung (4)
**dadurch gekennzeichnet,** daß Einrichtungen vorgesehen sind, die erst zeitverzögert in Abhängigkeit von der Qualität, der Menge oder der Zeit, die Absperrklappe (7) schließen oder nach ein oder mehreren Öffnungs- und Schließphasen geschlossen halten und die Einleitung von Regenwasser in die Abzweigleitung (4) freigeben, und die Siebeinrichtung (5) vor der Einleitung von Regenwasser in die Abzweigleitung (4) und/oder zwischen und/oder nach dem Einleiten oder nach Ende der Einleitung in die Abzweigleitung (4) durch Spülen der Sieboberfläche und/oder durch Durchspülen des Siebes (5) reinigen.

2. Vorrichtung nach Anspruch 1,
**dadurch gekennzeichnet,** daß die Einrichtungen ein Zeitschaltglied aufweisen.

3. Vorrichtung nach Anspruch 1,
**dadurch gekennzeichnet,** daß die Einrichtungen ein Mengenschaltglied aufweisen.

4. Vorrichtung nach Anspruch 1,
**dadurch gekennzeichnet,** daß die Einrichtungen Sensoren (8) aufweisen, die die Wasserqualität messen.

5. Vorrichtung nach einem der Ansprüche 1 bis 4,
**dadurch gekennzeichnet,** daß zwischen der Siebeinrichtung (5) und der Abzweigleitung (4) eine Überlaufkammer (9) angeordnet ist, von der aus von einem höher liegenden Niveau die Abzweigleitung (4) abzweigt.

6. Vorrichtung nach Anspruch 5,
**dadurch gekennzeichnet,** daß die Überlaufkammer (9) als Rückspülkammer zur Freispülung der Siebeinrichtung (5) ausgebildet ist.

7. Vorrichtung nach Anspruch 6,
**dadurch gekennzeichnet,** daß die Siebeinrichtung einen Siebkorb (5) aufweist, um den auf Abstand dazu ein Rohr (10) angeordnet ist, von dessem oberen Ende aus die Abzweigleitung (4) ausgeht, wobei der Ringraum zwischen dem Rohr (10) und dem Siebkorb (5) die Rückspülkammer (9) darstellt.

8. Vorrichtung nach einem der Ansprüche 1 bis 7,
**dadurch gekennzeichnet,** daß die Absperrklappe (7) durch Magnetkraft und/oder Federkraft und/oder Raste (32) und/oder das im Sammelbehälter (15, 36) gesammelte Wasser gegen das Gewicht der darüber sich befindenden Wassersäule in Schließstellung gehalten ist.

9. Vorrichtung nach einem der Ansprüche 1 bis 8,
**dadurch gekennzeichnet,** daß die Absperrklappe (7) durch einen Sammelbehälter (15,36) schließbar ist.

10. Vorrichtung nach Anspruch 9,
**dadurch gekennzeichnet,** daß die Absperrklappe (7) in Abhängigkeit von dem Wasserstand in dem Sammelbehälter (15,36) schließbar ist.

11. Vorrichtung nach Anspruch 9 oder 10,
**dadurch gekennzeichnet,** daß der Sammelbehälter (15,36) von einer Sammelrinne (12) oder aus dem Rückspülraum 9 und einem damit verbundenen Füllrohr (14) mit Regenwasser auffüllbar ist.

12. Vorrichtung nach Anspruch 1,
**dadurch gekennzeichnet,** daß die Absperrklappe (7) durch die Stellung eines Schwimmers (17) schließbar ist, der über ein Gestänge (18) mit der Absperrklappe (7) verbunden ist.

13. Vorrichtung nach Anspruch 9,
**dadurch gekennzeichnet,** daß der Sammelbehälter als Sammeltank (36) an der Absperrklappe (7) angeordnet ist, wobei der Sammeltank (36) mit einem Dosiergefäß (37) versehen ist, das über eine Fülleitung (14) mit Regenwasser befüllbar ist, wobei nach widerholtem Überschreiten einer bestimmten Füllmenge im Raum (52) oberhalb der Klappe durch eine Weiterleitung von Regenwasser aus dem Dosiergefäß (37) in den Sammeltank (36) die Absperrklappe (7) auf Dauer geschlossen wird.

14. Vorrichtung nach den Ansprüchen 1 bis 13,
**dadurch gekennzeichnet,** daß die Absperrklappe (7) während des Filtervorganges so verriegelt ist, daß sie beliebig hoch belastbar ist.

15. Vorrichtung nach den Ansprüchen 1 bis 14,
**dadurch gekennzeichnet,** daß Einrichtungen vorgesehen sind, die die Absperrklappe (7) auch während des Filtervorgangs öffnen, wenn der Filter (5) mit Schmutz zugesetzt ist.

## Claims

1. Arrangement for diverting rainwater out of a roof gutter downpipe (1, 2), with a housing (3) insertable into the downpipe and having a shut-off flap (7) and a screening device (5) in front of the branch conduit (4), characterised in that devices are provided which close the shut-off flap (7) only after a time delay depending on the quality, the quantity or the time, or hold it closed after one or more opening and closing phases and allow the introduction of rainwater into the branch conduit (4) and, before the introduction of rainwater into the branch conduit (4) and/or inbetween and/or after introduction or after the end of introduction into the branch conduit (4), clean the screening device (5) by rinsing the screen surface and/or by flushing the screen (5).

2. Arrangement according to Claim 1, characterised in that the devices have a time-dependent switching element.

3. Arrangement according to Claim 1, characterised in that the devices have a quantity-dependent switching element.

4. Arrangement according to Claim 1, characterised in that the devices have sensors (8) which measure the quality of the water.

5. Arrangement according to one of Claims 1 to 4, characterised in that an overflow chamber (9), from which the branch conduit (4) branches off at a relatively high level, is arranged between the screening device (5) and the branch conduit (4).

6. Arrangement according to Claim 5, characterised in that the overflow chamber (9) is designed as a back-flush chamber for flushing the screening device (5) clean.

7. Arrangement according to Claim 6, characterised in that the screening device has a filter screen (5) around which, at a distance, is arranged a tube (10), from the upper end of which the branch conduit (4) starts, the annular space between the tube (10) and the filter screen (5) representing the back-flush chamber (9).

8. Arrangement according to one of Claims 1 to 7, characterised in that the shut-off flap (7) is held in the closed position against the weight of the water column above it by magnetic force and/or spring force and/or a catch (32) and/or the water collected in the collecting container (15, 36).

9. Arrangement according to one of Claims 1 to 8, characterised in that the shut-off flap (7) can be closed by a collecting container (15, 36).

10. Arrangement according to Claim 9, characterised in that the shut-off flap (7) can be closed as a function of the water level in the collecting container (15, 36).

11. Arrangement according to Claim 9 or 10, characterised in that the collecting container (15, 36) can be filled with rainwater by a collecting groove (12) or from the back-flush chamber (9) and a filling tube (14) connected to the latter.

12. Arrangement according to Claim 1, characterised in that the shut-off flap (7) can be closed by means of the position of a float (17) which is connected via a linkage (18) to the shut-off flap (7).

13. Arrangement according to Claim 9, characterised in that the collecting container is arranged as a collecting tank (36) on the shut-off flap (7), the collecting tank (36) being provided with a metering vessel (37) which can be filled with rainwater via a filling conduit (14), the shut-off flap (7) being closed for a continuous period by rainwater being passed out of the metering vessel (37) into the collecting tank (36) after a certain filling volume in the space (52) above the flap has been repeatedly exceeded.

14. Arrangement according to Claims 1 to 13, characterised in that, during the filtering process, the shut-off flap (7) is locked in such a way that it can be subjected to a load of any level.

15. Arrangement according to Claims 1 to 14, characterised in that devices are provided which open the shut-off flap (7) even during the filtering process if the filter (5) is blocked with dirt.

## Revendications

1. Dispositif pour dériver de l'eau de pluie d' une descente de gouttière (1, 2) ,comportant un boîtier (3) adaptable à ladite descente et pourvu d'un clapet d'arrêt (7) et d'un organe filtrant (5) en amont du conduit de dérivation (4), **caractérisé** en ce qu'il est prévu des moyens qui agissent avec retard en fonction de la qualité, de la quantité ou du temps pour fermer le clapet d'arrêt (7) ou le retenir fermé après une ou plusieurs phases d'ouverture et de fermeture et admettre l'introduction d'eau de pluie dans le conduit de dérivation (4), et qui nettoient l'organe filtrant (5) en amont de l'entrée d'eau de pluie dans le conduit de dérivation (4) par rinçage de la surface filtrante et/ou par rinçage à travers le filtre (5) avant et/ou entre et/ou après chaque introduction ou à la fin de l'introduction dans le conduit de dérivation (4).

2. Dispositif selon la revendication 1, **caractérisé** en ce que lesdits moyens comportent un organe de commutation en fonction du temps.

3. Dispositif selon la revendication 1, **caractérisé** en ce que lesdits moyens comportent un organe de commutation en fonction d'une quantité.

4. Dispositif selon la revendication 1, **caractérisé** en ce que lesdits moyens comportent des capteurs (8) qui mesurent la qualité de l'eau.

5. Dispositif selon l'une des revendications 1 à 4, **caractérisé** en ce qu'il comporte, entre l'organe filtrant (5) et le conduit de dérivation (4), une chambre à débordement (9) d'où le conduit de dérivation (4) sort à un niveau supérieur.

6. Dispositif selon la revendication 5, **caractérisé** en ce que la chambre à débordement (9) est agencée en chambre de rinçage à contre-courant pour le nettoyage de l'organe filtrant (5).

7. Dispositif selon la revendication 6, **caractérisé** en ce que l'organe filtrant comporte un panier filtrant (5) autour duquel un tube (10) est disposé à distance de cet organe, le conduit de dérivation (4) partant de l' extrémité supérieure de ce tube, de sorte que l'intervalle annulaire entre le tube (10) et le panier filtrant (5) constitue la chambre de rinçage à contre-courant (9).

8. Dispositif selon l'une des revendications 1 à 7, **caractérisé** en ce que le clapet d'arrêt (7) est retenu en position fermée, contre le poids de la colonne d'eau se trouvant au-dessus de lui, par une force magnétique et/ou un ressort et/ou un cran d'arrêt (32) et/ou l'eau récoltée dans le bac collecteur (15, 36).

9. Dispositif selon l'une des revendications 1 à 8, **caractérisé** en ce que le clapet d'arrêt (7) est fermé au moyen d'un bac collecteur (15, 36).

10. Dispositif selon la revendication 9, **caractérisé** en ce que le clapet d'arrêt (7) est fermé en fonction du niveau de l'eau dans le bac collecteur (15, 36).

11. Dispositif selon la revendication 9 ou 10, **caractérisé** en ce que le bac collecteur (15, 36) se remplit d'eau de pluie à partir d'une rigole collectrice (12) ou de la chambre de rinçage à contre-courant (9) et d'un tuyau de remplissage (14) raccordé à celle-ci.

12. Dispositif selon la revendication 1, **caractérisé** en ce que le clapet d'arrêt (7) est fermé par la position d'un flotteur (17) relié au clapet (7) par une tringlerie (18).

13. Dispositif selon la revendication 9, **caractérisé** en ce que le bac collecteur est formé par un réservoir collecteur (36) monté sur le clapet d'arrêt (7) et pourvu d'un récipient doseur (37) susceptible d'être rempli d'eau de pluie par un conduit de remplissage (14), de sorte qu'après des dépassements répétés d'un remplissage déterminé dans la zone (52) située au-dessus du clapet, le clapet (7) est fermé pour une certaine durée par un écoulement subséquent d'eau de pluie du récipient doseur (37) au réservoir collecteur (36).

14. Dispositif selon l'une des revendications 1 à 13, **caractérisé** en ce que le clapet d'arrêt (7) est verrouillé pendant l'infiltration de façon à pouvoir être chargé à volonté.

15. Dispositif selon l'une des revendications 1 à 14, **caractérisé** en ce qu'il est prévu des moyens pour ouvrir le clapet d'arrêt (7) même pendant la filtration, quand le filtre (5) est bouché par de la saleté.
